# EUROPÄISCHE PATENTSCHRIFT

(11) **EP 1 511 701 B1**
(45) Veröffentlichungstag und Bekanntmachung des Hinweises auf die Patenterteilung: **16.04.2008**
(21) Anmeldenummer: 03740068.6
(22) Anmeldetag: 06.06.2003
(51) Int. Cl.: C05F 17/00, C05F 17/02

(54) **VERFAHREN ZUR VERROTTUNG VON MÜLL MITTELS EINER ADSORDIERENDEN PLANE**
METHOD FOR ROTTING WASTE BY MEANS OF AN ADSORBENT TARPAULIN
PROCEDE DE PUTREFACTION DE DECHETS A L'AIDE D'UNE BACHE ADSORBANTE

(30) Priorität: 10.06.2002 DE 20208885 U; 06.09.2002 DE 10241225; 06.09.2002 DE 10241224
(43) Veröffentlichungstag der Anmeldung: 09.03.2005
(73) Patentinhaber: HELSA-WERKE Helmut Sandler GmbH & Co. KG, 95482 Gefrees (DE)
(72) Erfinder: SELLNOW, Bernhard, 95466 Weidenberg (DE); BRÜHL, Martin, 95466 Weidenberg (DE)
(74) Vertreter: Zinsinger, Norbert
(86) Internationale Anmeldenummer: PCT/DE2003/001902
(87) Internationale Veröffentlichungsnummer: WO 2003/104165

(56) Entgegenhaltungen:
- EP-A- 1 209 138
- DE-U- 29 500 726

## Beschreibung

Die Erfindung betrifft ein Verfahren und eine Anlage zur Verrottung von zu einer Miete aufgeschüttetem Müll, insbesondere von zu einer Miete aufgeschüttetem Bio-Müll.

Der für die Entsorgung aufkommende Müll enthält vielfältige Bestandteile, wie Mono-Abfälle, Abfallgemische, Klärschlamm und Rest-Müll. Dieser Müll wird des öfteren einem Rotteprozeß unterzogen. Hierbei wird der Müll in offenen oder geschlossenen Systemen, wie Containern, Rotteboxen, Rottetürmen oder einer Trommelkompostierung, einem Rotteprozeß unterzogen.

Geschlossene Systeme haben hierbei den Nachteil, daß relativ hohe Investitions- und Energiekosten anfallen und daß diese Systeme unflexibel gegenüber Erweiterungen sind.

In DE 295 00 726 U1 ist eine Anlage zur Kompostierung von Bio-Müll beschrieben, bei der der angelieferte Bio-Müll zu einer Miete aufgehäuft wird. Durch die Belüftung des so gebildeten Mietenkörpers wird hierbei der natürliche Rotteprozeß unterstützt. Der zu einer Miete aufgehäufte Bio-Müll wird mit einer semipermeablen Membran abgedeckt. Diese Membran ist wasserundurchlässig, so daß sie die Miete vor einer Vemässung durch wetterbedingte Einflüsse schützt. Die Membran ist jedoch für Luft- und Wasserdampf durchlässig, so daß eine Belüftung der Miete von innen gut möglich ist. Ein Hauptteil des in der Miete befindlichen Wassers kondensiert in Tröpfchenform an der Innenseite der Membran, so daß diese Feuchtigkeit aufgrund der Wasserundurchlässigkeit der Membran nicht nach außen treten kann. In dem an der Innenseite der Membran niedergeschlagenen Wasser löst sich ein Hauptteil der Geruchsstoffe oder wird physikalisch an die Wassertröpfchen gebunden, so daß sich der Austritt von geruchsintensiven Gasen stark reduziert. Die Membran wird auf dem Deponieboden mit auf den Randbereichen liegenden, mit Wasser gefüllten Schläuchen fixiert. Die Belüftung des Mietenkörpers erfolgt mittels.eines Belüftungssystems, daß sich aus zwei Belüftungsrohrsträngen zusammensetzt.

In DE 198 51 361 A1 wird ein Verfahren zur Verrottung von Haus-, Gewerbe-und Sperr-Müll beschrieben. Durch dieses Verfahren wird angestrebt, das Volumen des Mülls zu reduzieren und damit die Laufzeit einer Deponie zu verlängern. Der angelieferte Müll wird mittels Polygreifer und Radladern bei gleichzeitiger Impfung mit Pilzkulturen homogenisiert. Sodann wird der Müll zu einer Vorrott-Miete aufgehäuft. Diese Vorrott-Miete wird nach 8 Wochen Wartezeit mit unmittelbar anschließender mechanischer Behandlung durch Zerkleinerung des Mülls und Absiebung der Organik-Anteile aufgelöst. Die im Rotteprozeß dieses Verfahrens entstehenden Humin-Stoffe fungieren als Puffermaterial, das den Nachweis toxischer Stoffe bei einer späteren Bepflanzung nahezu ausschließt.

Der Erfindung liegt nun die Aufgabe zugrunde, eine einfache und kosteneffektive Möglichkeit zu schaffen, den Verrottungsprozeß von Müll zu optimieren und eine effektive Umsetzung des Mülls sicher zu stellen.

Diese Aufgabe wird gelöst durch ein Verfahren zur Verrottung von zu einer Miete aufgeschüttetem Müll, bei dem die Miete mit einer wärmeisolierenden, Schadstoffe und/oder Gerüche adsorbierenden Plane abgedeckt wird, die eine Schicht aus offenporigem Schaumstoff mit einer Schichtdicke von 1,5 mm bis 8 mm aufweist, und bei der die Porenoberfläche des Schaumstoffes mit einem partikelförmigen Adsorptionsmittel oder mit einem Gemisch aus partikelförmigen Adsorptionsmitteln zur Adsorption der Schadstoffe und/oder Gerüche besetzt sind, und bei dem die abgedeckte Miete mittels eines Lüfters und eines mit dem Lüfter verbundenen Luftverteilsystem belüftet wird, das ein oder mehrere Luftverteilungselemente aufweist, die sich in oder unter der Miete erstrecken. Diese Aufgabe wird weiter gelöst von einer Anlage zur Verrottung von zu einer Miete aufgeschüttetem Müll, die einen Lüfter und ein mit dem Lüfter verbundenes Luftverteilsystem zur Belüftung des Mülls aufweist, wobei das Luftverteilsystem ein oder mehrere Luftverteilungselemente aufweist, die sich in oder unter der Miete erstrecken, und die Anlage weiter eine wärmeisolierende, Schadstoffe und/oder Gerüche adsorbierende Plane zur Abdeckung der Miete aufweist, wobei die Plane eine Schicht aus offenporigem Schaumstoff einer Schichtdicke von 1,5 mm bis 8 mm aufweist und die Porenoberfläche des Schaumstoffes mit einem partikelförmigen Adsorptionsmittel oder mit einem Gemisch aus partikelförmigen Adsorptionsmitteln zur Adsorption der Schadstoffe und/oder Gerüche besetzt sind.

Diese Aufgabe wird weiter durch ein Verfahren zur Verrottung von zu einer Miete aufgeschüttetem Müll gelöst, bei dem die Anfangs-Feuchtigkeit der Miete auf 50 % bis 70 %, bevorzugt auf etwa 60 %, eingestellt wird, bei dem die Miete mit einer Plane abgedeckt wird, die wasserabweisend und luftdurchlässig ist und ein partikelförmiges Adsorptionsmittel und/oder ein Gemisch aus partikelförmigen Adsorptionsmitteln zur Adsorption von Schadstoffen und/oder Gerüchen enthält, und bei dem die abgedeckte Miete mittels eines Lüfters und eines mit dem Lüfter verbundenen Luftverteilsystem belüftet wird, das ein oder mehrere Luftverteilungselemente aufweist, die sich in oder unter der Miete erstrecken, wobei der durch den Lüfter und das Luftverteilsystem bewirkte Lufteintrag in die Miete auf das 0,5- bis 8-fache des Anfangmietenvolumens in m³/h eingestellt wird. Diese Aufgabe wird weiter gelöst durch eine Anlage zur Verrottung von zu einer Miete aufgeschüttetem Müll, die einen Lüfter und ein mit dem Lüfter verbundenes Luftverteilsystem zur Belüftung des Mülls aufweist, wobei das Luftverteilsystem ein oder mehrere Luftverteilungselemente aufweist, die sich in oder unter der Miete erstrecken und der Lüfter so dimensioniert und gesteuert ist, daß der Lufteintrag in die Miete zwischen dem 0,5- bis 8-fachen des Anfangmietenvolumens in m³/h liegt, bei der die Anfangs-Feuchtigkeit der Miete 50 % bis 70 %, bevorzugt 60 %, beträgt und die eine Plane zur Abdeckung der Miete aufweist, die wasserabweisend und luftdurchlässig ist und ein partikelförmiges Adsorptionsmittel und/oder ein Gemisch aus partikelförmigen Adsorptionsmitteln zur Adsorption von Schadstoffen und/oder Gerüchen enthält.

Die Erfindung bringt den Vorteil mit sich, daß der Verrottungsprozeß des Mülls optimiert und so eine besonders effektive Umsetzung der Bio-Masse erreicht wird. Durch die Kombination einer aktiven Belüftung mit der Abdeckung durch die oben spezifizierte spezielle Plane wird erreicht, daß eine optimale Kombination von Mietenfeuchtigkeit, Mietenbelüftung und Mietentemperatur in der Miete überlange Zeit aufrecht erhalten werden kann. Die Mikroorganismen, die für den Abbau der Biomasse in mineralische Verbindungen verantwortlich sind, finden so optimale Milieubedingungen vor. Eine anaerobe Verrottung wird weitgehend verhindert. Es entstehen so auch weniger schädliche und geruchsintensive Gase.

Durch die spezielle Ausgestaltung der Plane wird zum einen der Wärmeaustrag aus der Miete reduziert und eine bis dicht unterhalb der Mietenoberfläche konstante Mietentemperatur erreicht. Durch die Anordnung des partikelförmigen Adsorptionsmittels an den Wänden der Poren des Schaumstoffes wird ein "dreidimensionaler" Funktionskörper geschaffen, in dem das partikelförmige Adsorptionsmittel zum einen Schadstoffe und/oder Geruchsstoffe adsorbiert und zum anderen Feuchtigkeit aufnimmt und speichert, die in dem durch die Belüftung aus der Miete ausgetragenen Wasser und Wasserdampf enthalten ist. Durch diese Aufnahme von Feuchtigkeit wird zum einen der Feuchtigkeitshaushalt der Miete stabilisiert und zum anderen wird die Umsetzung und Adsorption von Schadstoffen und Geruchsstoffen durch das partikelförmige Adsorptionsmittel verbessert. Weiter wird eine Wärmespeichierung erreicht, wodurch eine stabilisierende Wirkung auf den Wärmehaushalt der Miete bewirkt wird. Durch diese spezielle Anordnung des partikelförmigen Adsorptionsmittels wird somit die in der Miete entstehenden schädlichen und geruchsintensiven Gase besonders gut adsorbiert und neutralisiert, so daß diese Stoffe weder die Umwelt noch den Verrottungsprozeß beeinträchtigen können. Weiter wird der Feuchtigkeitshaushalt und der Wärmehaushalt der Miete positiv beeinflußt.

Ein weiterer wesentlicher Vorteil der Verwendung eines derartigen dreidimensionalen Funktionskörpers im Vergleich zu den bisher verwendeten "siebförmigen" Strukturen, beispielsweise wasserundurchlässige, jedoch luft-und wasserdampfdurchlässige Membrane, besteht darin, daß eine Verstopfung der Poren weitgehend vermieden wird. Versuche haben ergeben, daß durch die in einer aktiv belüfteten Miete auftretenden Schwebstoffe derartige "siebförmige" Strukturen schnell verstopfen und damit ihre Funktionen nicht mehr wahrnehmen können. Dies führt zum Verlust der Luftdurchgängigkeit der Membran, wodurch der Ablauf unkontrolliertere Prozesse bis hin zur Bildung von explosiven Gemischen begünstigt wird. Dies führt weiter zu unkontrollierter Bildung von belasteten Kondensaten, die sich negativ auf den Verrottungsprozeß auswirken und zum anderen Entsorgungsprobleme durch die Entstehung von belastetem Sickerwasser verursachen können. Das in den Schaumstoffporen angeordnete partikelförmige Adsorptionsmittel bildet im Gegensatz dazu ein "lebendes System", bei dem eine derartige Verstopfung von Poren weitgehend vermieden wird.

Die Erfindung bringt weiter den Vorteil mit sich, daß der Verrottungsprozeß des Mülls optimiert wird und so eine besonders effektive Umsetzung der Biomasse erreicht wird. Durch die beanspruchte Kombination der Faktoren aktive Belüftung, Lufteintrag zwischen dem 0,5- bis 8-fachen des Anfangmietenvolumens, Anfangs-Feuchtigkeit der Miete zwischen 50 % bis 70 % und Abdeckung der Miete mittels der oben spezifizierten speziellen Plane wird erreicht, daß optimierte Milieubedingungen für die Mikroorganismen, die für den Abbau der Biomasse in mineralische Verbindungen verantwortlich sind, über lange Zeit und in weiten Bereichen der Miete sichergestellt werden. Ein zu hoher Wärme- und Feuchtigkeitsaustrag aus der Miete wird ebenso verhindert, wie das Entstehen von anaeroben Verrottungsprozessen. Es entstehen so auch weniger schädliche und geruchsintensive Gase. Die entstehenden, schädlichen und geruchsintensiven Gase werden von dem partikelförmigen Adsorptionsmittel der Plane adsorbiert und neutralisiert, so daß diese Stoffe weder die Umwelt noch den Verrottungsprozeß beeinträchtigen können.

Ein weiterer Vorteil der Erfindung besteht darin, daß eine besonders kosteneffektive Verrottung von Müll ermöglicht wird. Durch die mittels der Erfindung geschaffenen optimalen Milieubedingungen für Mikroorganismen (Wärme, Feuchtigkeit, Luftzufuhr, Adsorption und Neutralisation von schädlichen Gasen und Stoffen) verkürzt sich die notwendige Verrottungszeit erheblich. Weiter wird ein besonders gutes Verrottungsergebnis erzielt, was sich in einer hohen Volumen- und Gewichtsreduktion niederschlägt. Da dank der Erfindung weitgehend in der gesamten Rotte optimale Milieubedingungen für Mikroorganismen herrschen, entfällt die Notwendigkeit, während der Verrottungszeit eine Miete umzusetzen, die einen größeren Biomüllanteil aufweist, oder es wird zumindest die Häufigkeit eines solchen UmsetzVorgangs erheblich reduziert. Damit entfällt ein weiterer erheblicher Kostenfaktor oder wird zumindest erheblich reduziert.

Weiter wird durch die Erfindung eine effektive Hygienisierung des Abfalls sicher gestellt. Unter dem Begriff Hygienisierung ist die sichere Abtötung pathogener Keime, also die Entseuchung durch Selbststerilisierung des Kompostes zu verstehen. In der Miete entstehen beim Einsatz der Erfindung lang anhaltende hohe Temperaturen bis zu 80° C, wobei dank dem Einsatz der Erfindung diese hohen Temperaturen nahezu in der gesamten Miete erreicht werden. Dadurch können krankheitserregende Keime und Bakterien sicher im gesamten Mietenkörper abgetötet werden.

Ein weiterer Vorteil der Erfindung besteht darin, daß während der Rottezeit der Rottevorgang, beispielsweise die Temperatur- und Gasverhältnisse in der aufgesetzten Miete, nur in weiten Zeitabständen überwacht werden muß. Dadurch verringert sich der für die Überwachung der Miete notwendige Kostenaufwand.

Weitere Vorteile der Erfindung sind niedrige Investitionskosten, eine sehr schnelle Einsatzbereitschaft, ein hohes Maß an Flexibilität und eine Reduzierung des notwendigen Deponievolumens.

Vorteilhafte Ausgestaltungen der Erfindung sind in den Unteransprüchen bezeichnet.

Es ist besonders vorteilhaft, für die Schicht aus offenporigem Schaumstoff einen Schaumstoff zu verwenden, dessen Poren einen Durchmesser von 0,05 mm bis 2,0 mm besitzen und ein Adsorptionsmittel zu verwenden, dessen Partikeldurchmesser zwischen 10 und 100 µm liegt.

Bei einer derartigen Abmessung der Schaumstoffporen und des partikelförmigen Adsorptionsmittels wird zum einen das oben beschriebene "Verstopfen" von Poren weitgehend vermieden und zum anderen eine auf den Verrottungsprozeß optimierte Luft- und Wasserdampfdurchlässigkeit der Plane eingestellt.

Um die Reißfestigkeit der Plane sicher zu stellen, ist es vorteilhaft, die Plane als einen textilen Flächenverbund auszubilden, bei dem die Schicht aus offenporigem Schaumstoff auf einen textilen Träger aufkaschiert ist.

Vorteile für den Feuchtigkeitshaushalt der Miete ergeben sich weiter dadurch, daß dieser textile Träger von einem Polyestergelege mit einer Maschenweite von 1 bis 5 Fäden pro cm gebildet wird, wobei die Polyesterfäden eine mindestens 10 mal größere Breite als Dicke besitzen, vorzugsweise eine Breite von etwa 1 mm und eine Dicke von 0,01 mm besitzen. Durch eine derartige Ausgestaltung des textilen Flächenverbundes werden die wasserabweisenden Eigenschaften der Plane verbessert, so daß die Abhängigkeit des Rotteprozesses von Witterungsbedingungen (Regen, starke Trockenheit) weiter verringert wird. Weiter stellt diese Ausgestaltung der Plane eine besonders kostengünstige Lösung zur Erreichung dieses Effektes dar.

Es ist zweckmäßig, als Schaumstoff für die Schicht aus offenporigem Schaumstoff einen Polyurethanschaum zu verwenden.

Weitere Vorteile werden dadurch erzielt, daß die Plane schwarz eingefärbt wird. Durch die schwarze Färbung erwärmt sich die Folie bei Sonneneinstrahlung, wodurch die wärmeisolierenden Eigenschaften der Plane unterstützt werden.

Es ist zweckmäßig, daß die Miete seitlich mit einer oder mit mehreren flexiblen Stellwänden begrenzt wird. Hierdurch ist es möglich, die notwendige Planenfläche zu verringern und optimale thermophile Milieubedingungen in breiten Bereichen der Miete sicher zu stellen. Weiter wird dadurch ein flexiblerer und schnellerer Aufbau einer in den Abmessungen optimierten Miete ermöglicht.

Das Luftverteilsystem wird zweckmäßigerweise aus ein oder mehreren Belüftungsrohren zur Führung eines Hauptluftstromes und aus ein oder mehreren mit Belüftungsöffnungen versehenen Drainageschläuchen zur Führung eines Teilluftstromes zusammengesetzt. Hierdurch ist es möglich, die Belüftung der Miete individuell auf die Abmessungen der Miete zu optimieren. Drainageschläuche werden hierbei vorzugsweise in einem Abstand von 1 bis 6 m verlegt.

Es ist vorteilhaft, dem Müll ein Biosubstrat-Konzentrat hinzuzufügen. Hierdurch werden ein schneller Start des Verrottungsprozesses und der Ablauf eines Verrottungsprozesses gewährleistet, der über eine optimierte Mikroorganismen-Population verfügt. Dem Müll wird das Biosubstrat zur Milieuverbesserung zuzugeben. Als Biosubstrat kommen vorzugsweise flüssige Bakteriennährböden, Nährstoffe, Enzyme oder Bakterien zum Einsatz. Durch die Zugabe von Biosubstrat werden ein schneller Start des Rotteprozesses und der Ablauf eines Rotteprozesses gewährleistet, der über eine optimierte Mikroorganismen-Population verfügt.

Als besonders vorteilhaft hat es sich hierbei erwiesen, ein Biosubstrat einzusetzen, das als Wirkstoff Polyuronsäure enthält. Weiter hat sich der Einsatz von Bodenhilfsstoffen und/oder Pflanzenhilfsmittel als Biosubstrat bewährt.

Bodenhilfsstoffe sind hierbei Stoffe ohne wesentlichen Nährstoffgehalt, die den Boden biologisch, chemisch oder physikalisch beeinflussen, und seinen Zustand oder die Wirksamkeit von Düngemitteln zu verbessern. Pflanzenhilfsmittel sind Stoffe ohne wesentlichen Nährstoffgehalt, die dazu bestimmt sind, auf Pflanzen einzuwirken oder die Aufhebung organischer Stoffe zu beeinflussen.

Der Einsatz von Stoffen, die keinen wesentlichen Nährstoffgehalt aufweisen, jedoch die Milieubedingungen der Mikroorganismen verbessern, führt zu einer besonders hohen Volumen- und Gewichtsreduktion des Mülls und ist auch unter Kostengesichtspunkten vorzuziehen.

Es hat sich als zweckmäßig erwiesen, ein Biosubstrat-Konzentrat zu verwenden, das vor der Zugabe zum Müll mit Wasser verdünnt wird. Eine besonders gute Impfung des Mülls mit dem Biosubstrat wird hierbei dadurch erreicht, daß das Biosubstrat-Konzentrat mit Wasser in einem Verdünnungsverhältnis im Bereich von 1 : 20 bis 1 : 5 verdünnt wird.

Als besonders vorteilhaft hat es sich unter Kosten-Nutzen-Gesichtspunkten erwiesen, das Biosubstrat in einem Verhältnis von 0,05 bis 0,2 l/t, insbesondere im Bereich von 0,07 bis 0,15 l/t, dem Müll zuzusetzen. Diese Dosierung des Biosubstrates bezieht sich hierbei auf die Konzentration des Biosubstrat-Wirkstoffes pro t Müll und ist bei Verdünnung des Biosubstrat-Wirkstoffes, beispielsweise durch Wasser, entsprechend abzuändern.

Von den Abmessungen der Miete werden zum einen die Durchlüftungseigenschaften des Mietenkörpers und zum anderen der Wärmeaustrag aus der Miete durch die Belüftung bestimmt. Eine effektive Umsetzung der Stoffe und eine optimale Hygienisierung finden nur bei thermophilen Milieubedingungen statt. Unter dem Begriff "thermophile Milieubedingungen" ist hier ein Temperaturbereich von ca. 55 bis 80 °C zu verstehen. Um nun solche thermophilen Milieubedingungen in dem Großteil der Miete bei gleichzeitig ausreichender Durchlüftung der Miete zu gewährleisten, hat es sich bei der Abdeckung der Miete mit der speziellen, oben bezeichneten Plane als vorteilhaft erwiesen, die Abmessungen der Miete wie folgt zu wählen:

Die Mietenhöhe sollte maximal 3 m betragen. Die Grundfläche der Miete sollte mindestens 0,6 m² pro t Müll einnehmen und die Miete sollte mindestens eine Länge von 10 m und eine Breite von 4 bis 20 m, bevorzugt von 10 m, einnehmen.

Weiter wird der Rotteprozeß dadurch günstig beeinflußt, daß der Lüfter so gesteuert wird, daß der Lufteintrag in die Miete zwischen dem 0,5- bis 8-fachen des Anfangsmietenvolumens in m³/h, insbesondere zwischen dem 1- bis 2-fachen des Anfangsmietenvolumens in m³/h, liegt. Weiter hat es sich als vorteilhaft erwiesen, den Lüfter so zu steuern, daß die Rottetemperatur zwischen 50 °C und 80 °C, insbesondere zwischen 60 °C und 70 °C liegt.

Es hat sich gezeigt, daß das erfindungsgemäße Verfahren zur Verrottung von Müll besonders gut zur Verrottung von Bio-Müll, zur Verrottung von Haus-, Gewerbe- oder Sperr-Müll mit einem Organik-Anteil von mindestens 20 Gewichtsprozenten und zur Verrottung von Klärschlamm verwendet werden kann.

Im folgenden wird die Erfindung anhand von mehreren Ausführungsbeispielen unter Zuhilfenahme der beiliegenden Zeichnungen beispielhaft erläutert.
- Fig. 1: zeigt eine schematische Darstellung einer Anlage zur Verrottung von zu einer Miete aufgeschüttetem Müll.
- Fig. 2: zeigt eine schematische Darstellung eines Querschnitts der Anlage nach Fig. 1.
- Fig. 3: zeigt eine schematische Darstellung einer Draufsicht der Anlage nach Fig. 1.
- Fig. 4: zeigt eine schematische Darstellung einer Plane, die in der Anlage nach Fig. 1 verwendet wird.

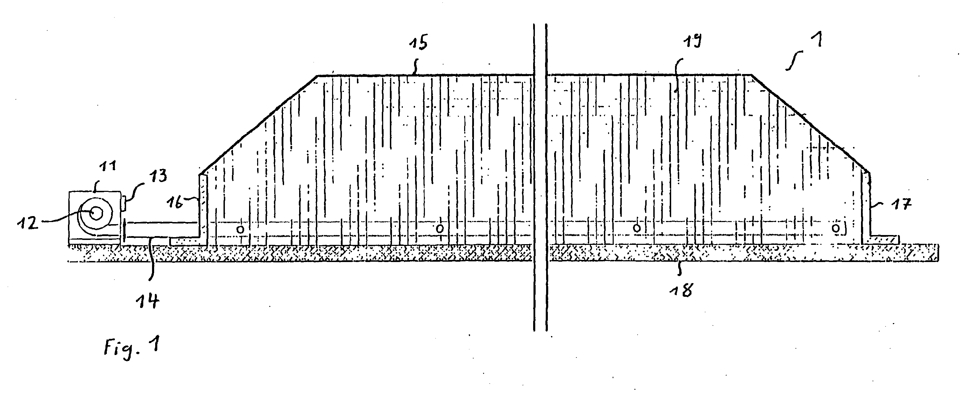

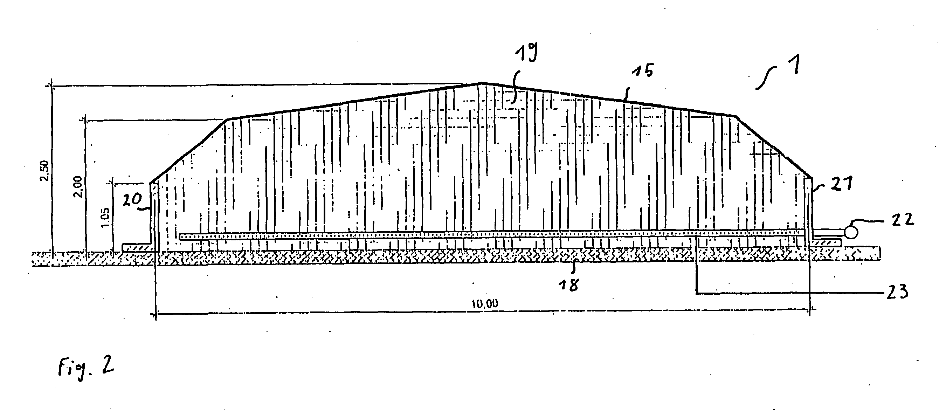

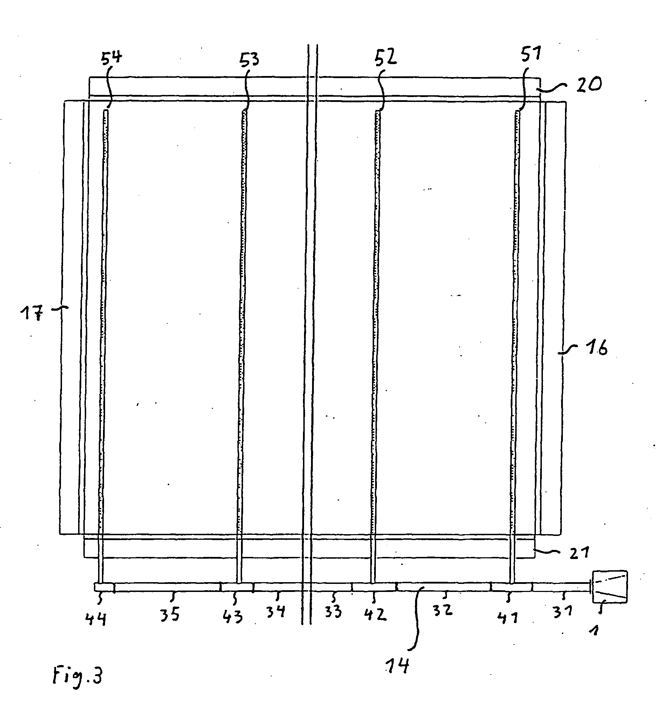

Die Figuren 1 bis 3 zeigen zu einer Miete 1 aufgeschütteten Müll 19, einen Lüfter 11, ein Luftverteilsystem 14, flexible Stellwände 16, 17, 20 und 21, eine Plane 15 und einen befestigten Untergrund 18. Fig. 1 zeigt hierbei einen Längsschnitt der Miete 1, Fig. 2 zeigt einen Querschnitt der Miete 1 und Fig. 3 zeigt eine Draufsicht der Miete 1.

Der Lüfter 11 weist eine Zuluftöffnung 12 und ein Steuergerät 13 auf. Weiter ist der Lüfter 11 mit dem Luftverteilsystem 14 verbunden, so daß er die über die Zuluftöffnung 12 angesaugte Luft in das Luftverteilsystem 14 leitet.

Der Lüfter 11 besteht vorteilhafterweise aus einem leistungsfähigen Radiallüfter, der aufgrund seiner Bauweise gegen einen größeren Staudruck arbeiten kann, ohne heiß zu laufen und dadurch Schaden zu nehmen.

Das Steuergerät 13 dient der Steuerung und Regelung des Lüfters 11. Es kann von einer einfachen Steuerelektronik gebildet werden, mittels der es dem Bediener möglich ist, den Lufteintrag durch den Lüfter 11 auf einen bestimmten Wert einzustellen. Es ist jedoch auch möglich, daß das Steuergerät 13 eine Regelelektronik umfaßt, mittels der das Steuergerät 13 den Lufteintrag in die Miete 1 automatisch regelt. In diesem Fall verfügt das Steuergerät 13 über einen oder mehrere Sensoren, die die Parameter der Miete erfassen. Solche Parameter sind beispielsweise Mietenfeuchtigkeit, Mietentemperatur oder Sauerstoffgehalt der Miete. Diese Parameter können an einer oder an mehreren Stellen innerhalb der Miete 1 erfaßt werden. Die erfaßten Parameter werden von dem Steuergerät 13 mit voreingestellten Parametern verglichen und die Leistung des Lüftermotors des Lüfters 11 dann entsprechend gesteuert.

Das Luftverteilsystem 14 dient dazu, eine möglichst gute und gleichmäßige Belüftung der Miete 1 sicher zu stellen. Das Belüftungssystem 14 ist hierbei aus mehreren Luftvertellungselementen zusammengesetzt. Die einzelnen Luftverteilungselemente bestehen vorzugsweise aus gerade ausgeformten Rohren, die einen kreisförmigen Querschnitt aufweisen und die mittels Steckverbindungen miteinander verbindbar sind. Hierdurch ist es möglich, daß das Luftverteilsystem 14 schnell und kostengünstig aufbaubar ist und flexibel an unterschiedliche Mietengrößen angepasst werden kann.

Das Luftverteilsystem 14 ist vorzugsweise aus zwei Arten von Luftverteilungselementen zusammengesetzt: Zum einen aus Belüftungsrohren zur Führung eines Hauptluftstromes und zum anderen aus mit Belüftungsöffnungen versehenen Drainageschläuchen zur Führung eines Teilluftstromes. Wie in Fig. 2 dargestellt, weist das Luftverteilsystem 14 somit ein Belüftungsrohr 22, das außerhalb der Miete 1 angeordnet ist, und mindestens einen Drainageschlauch 23 auf, der sich in oder unter der Miete 1 erstreckt und der mit Lüftungsöffnungen zur Belüftung der Miete 1 versehen ist.

Der genaue Aufbau des Luftverteilsystems 14 ergibt sich aus Fig. 3. Das Luftverteilsystem 14 besteht aus mehreren Belüftungsrohren 31 bis 35 und 41 bis 44. Diese Belüftungsrohre führen den Hauptluftstrom. Von diesen Belüftungsrohren zweigen mehrere Drainageschläuche 51 bis 54 ab, die einen Teilluftstrom führen. Die Belüftungsrohre 31 bis 35 sind "normale" Belüftungsrohre und die Belüftungsrohre 41 bis 44 sind Belüftungsrohr-T-Stücke, die jeweils über eine Anschlußmöglichkeit für einen Drainageschlauch verfügen. Die Belüftungsrohre 31 bis 44 werden hierbei über Rohrverbindungsstellen, bei denen es sich vorzugsweise um eine von den Steckverbindungen handelt, miteinander verbunden. Hierbei ist es auch möglich, daß sich der Querschnitt der Belüftungsrohre 31 bis 44 mit zunehmender Distanz von dem Lüfter 1 verringert, um eine gleichmäßige Druckverteilung in den Drainageschläuchen 51 bis 54 zu gewährleisten.

Die Drainageschläuche 51 bis 54 bestehen aus einem flexiblen Material und sind gelocht oder geschlitzt. Die Abstände der einzelnen Drainageschläuche 51 bis 54 zueinander werden hierbei so gewählt, daß eine gleichmäßige Luftverteilung in der Miete 1 erreicht wird. Als besonders günstig hat es sich hierbei erwiesen, die Drainageschläuche 51 bis 54 in einem Abstand zwischen 1 bis 6 m voneinander zu verlegen.

Beträgt die Breite der Miete 10 m und ist ein Gesamtvolumen von 800 m³ zu belüften, so kommen bevorzugt 14 Drainageschläuche zum Einsatz, wobei der Abstand der Drainageschläuche zueinander 3 m beträgt. Hierbei muß die in Fig. 2 gezeigte Geometrie beachtet werden. Die maximale Mietenhöhe beträgt 2,50 m. Anhand der Fig. 2 wird deutlich, daß etwa 90 % des Mietenvolumens bereits bei 2,00 m aufgefüllt sind. Wenn man 14 Drainageschläuche mit dem angegebenen Abstand von 3 m verlegt, benötigt man 39 m, so daß die Länge der Miete etwa 40 m beträgt.

Es ist auch möglich, das Luftverteilsystem 14 mit mehr als einem Lüfter zu verbinden oder die Miete 1 mit zwei oder mehreren voneinander getrennten Luftverteilsystemen zu belüften. Durch solch eine Vorgehensweise kann unter Umständen eine besonders gleichmäßige Belüftung der Miete 1 erreicht werden.

Bei den Stellwänden 16, 17, 20 und 21 handelt es sich um flexible Stellwände. Die Stellwände 16,17, 20 und 21 sind somit beispielsweise jeweils aus mehreren Leitsteinen zusammengesetzt, die während oder vor dem Aufbau der Miete 1 entsprechend der geplanten Mietengröße der Miete 1 plaziert werden. Hierbei ist es vorteilhaft, daß die Einzelelemente der Stellwände 16, 17, 20 und 21 über eine oder mehrere Öffnungen zur Durchführung der Drainageschläuche 51 bis 54 verfügen.

Durch die flexible Ausgestaltung der Stellwände und des Luftverteilsystems wird erreicht, daß die erfindungsgemäße Verrottungsanlagewach Art eines "Baukastensystems" an verschiedenste Mietengrößen flexibel anpaßbar ist und damit die oben beschriebenen Vorteile der Erfindung mittels ein und derselben Verrottungsanlage für verschiedenste Mietengrößen erzielt werden können.

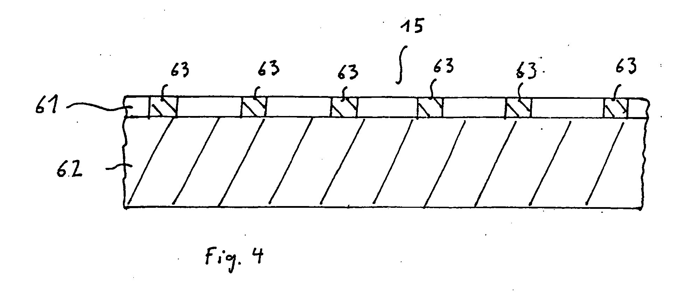

Fig. 4 zeigt den Aufbau der Plane 15. Die Plane 15 weist eine Schicht aus offenporigem Schaumstoff 62 und einen textilen Träger 61 auf.

Die Plane 15 ist wärmeisolierend und adsorbiert Schadstoffe und/oder Gerüche. Weiter ist die Plane 15 vorzugsweise als wasserabweisende und luftdurchlässige Plane ausgestaltet.

Die Schicht 62 besteht aus einer Schicht aus offenporigem Schaumstoff mit einer Schichtdicke von 1,5 mm bis 8 mm. Die Porenoberfläche des Schaumstoffes sind weiter mit einem partikelförmigen Adsorptionsmittel zur Adsorption der Schadstoffe und/oder Gerüche besetzt. Als Schaumstoff wird vorzugsweise ein retikulierter Polyurethan-Schaum verwendet. Die wärmeisolierenden Eigenschaften der Schicht 62 ergeben sich zum einen durch die guten wärmeisolierenden Eigenschaften des Schaumstoffmaterials und zum anderen aus der Wahl einer geeigneten Schichtdicke dieses Materials. Als besonders vorteilhaft hat sich hierbei der Schichtdickenbereich von 1,5 mm bis 8 mm erwiesen, bei dem die Schaumstoff-Schicht zum einen bereits eine gute Wärmeisolierung aufweist und zum anderen eine auf den Verrottungsprozeß optimierte Luftdurchlässigkeit besitzt. Ein partikelförmiges Adsorptionsmittel ist beispielsweise mittels eines Acrylklebers an den Innenwänden der Poren des Schaumstoffes fixiert. Die Schaumstoffporen der Schicht aus offenporigem Schaumstoff besitzen hierbei einen Durchmesser von 0,05 mm bis 2,0 mm und das zu verwendende Adsorptionsmittel besitzt einen Partikeldurchmesser von 10 bis 100 µm. Weiter weist das Adsorptionsmittel Poren mit unterschiedlichem Durchmesser auf. Die verwendeten partikelförmigen Adsorptionsmittel weisen vorzugsweise Mikroporen mit einem Durchmesser von < 2 nm, Mesoporen mit einem Durchmesser von 2 bis 50 nm und Makroporen mit einem Durchmesser größer als 50 nm auf.

Die zu verwendenden partikelförmigen Adsorptionsmittel bestehen vorzugsweise aus Aktivkohle. Es können jedoch auch Ionenaustauscher, Zeolithe und sonstige Stoffe mit adsorbierenden Eigenschaften verwendet werden.

Der textile Träger 61 besteht vorzugsweise aus einem Polyestergelege, auf den die Schicht aus offenporigem Schaumstoff 62 aufkaschiert ist. Der textile Träger 61 kann natürlich auch aus einem anderen Material hergestellt werden. Die Verwendung eines Polyestergeleges hat jedoch den Vorteil, daß ein solches Gelege in hohem Maße witterungsbeständig ist.

Die Maschenweite des Polyestergewebes beträgt vorzugsweise 1 bis 5 Fäden/cm. Auf diese Weise wird eine ausreichende Stabilität des textilen Flächenverbundes gewährleistet.

Um die feuchtigkeitsabweisenden Eigenschaften der Plane 15 zu optimieren, ist es vorteilhaft, die Fäden 63 des textilen Trägers 61 derart auszuformen, daß sie eine mindestens 10 mal größere Breite als Dicke besitzen. Als besonders vorteilhaft hat es sich hierbei erwiesen, wenn die Fäden 63 eine Breite von etwa 1 mm und eine Dicke von etwa 0,01 mm besitzen. In Verbindung mit der oben angegebenen Maschenweite ergibt sich somit ein textiler Träger 61, der zum einen die wasserabweisenden Eigenschaften der Plane 15 in ausreichender Weise verbessert und zum anderen noch eine ausreichende Luftdurchlässigkeit der Plane 15 gewährleistet. Weiter wird durch einen solchen Schichtaufbau gewährleistet, daß die Plane über eine hohe Festigkeit verfügt und daß die Verweildauer der durchtretenden Gasgemische in der adsorptiven Schicht und somit die Adsorptions-Effizienz erhöht werden. Eine zu hohe Austrocknung der Miete und ein zu hoher Feuchtigkeitseintrag in die Miete, beispielsweise durch Regen, wird vermieden. Weiter bleibt eine derart aufgebaute Plane auch im feuchten Zustand luftdurchlässig, so daß sich auch bei ungünstigen Witterungsbedingungen ein optimaler Feuchtigkeitsgehalt und eine optimale Durchlüftung der Miete sicher gestellt werden können.

Sowohl die Schicht aus offenporigem Schaumstoff 62 als auch der textile Träger 61 sind schwarz gefärbt. Es ist jedoch auch möglich, daß lediglich der Schaumstoff 62 schwarz eingefärbt ist.

Bei der Durchführung des erfindungsgemäßen Verfahrens zur Verrottung von zu einer Miete aufgeschüttetem Müll wird wie folgt vorgegangen:

Vor dem Aufsetzen der Miete wird der Müll geschreddert und vorzugsweise mit Strukturmaterial und Biosubstrat als Milieuverbesserer versetzt. Als Müll kann Bio-Müll, Haus-, Gewerbe- oder Sperr-Müll mit einem Organik-Anteil von mindestens 20 Gewichtsprozente verwendet werden. Weiter ist es auch möglich, als Müll Klärschlamm zu verwenden.

Als Biosubstrat werden vorzugsweise flüssige Bakteriennährböden, Nährstoffe, Enzyme oder Bakterien eingesetzt.

Als besonders vorteilhaft hat sich hierbei der Einsatz von Biosubstraten erwiesen, die Polyuronsäuren, beispielsweise aus Braunalgen der Art Ascophyllum nodosum, als Wirkstoff einsetzen. Weitere Inhaltsstoffe solcher Biosubstrate sind beispielsweise Jod, Spurenelemente und Salze. Solche Substrate gehören zu den Bodenhilfsstoffen bzw. Pflanzenhilfsmitteln und erhöhen das Wachstum der für den Verrottungsprozeß benötigten Mikroorganismen.

Weiter können als Biosubstrate Bodenhilfsstoffe bzw. Pflanzenhilfsmittel verwendet werden, die ohne wesentlichen Nährstoffgehalt eine Milieuverbesserung bewirken und das Wachstum der für den Verrottungsprozeß benötigten Mikroorganismen erhöhen.

Die verwendeten Biosubstrate sollten möglichst voll löslich in Wasser sein und im unverdünnten Zustand einen pH-Wert von 12 bis 13 besitzen.

Weiter ist es vorteilhaft, ein Biosubstrat zu verwenden, das eine Kombination der oben genannten,verschiedenartig wirkenden Substanzen (Bakteriennährböden, Nährstoffe, Enzyme und Bakterien) als Wirkstoffe enthält.

Das Biosubstrat wird vorzugsweise als Biosubstrat-Konzentrat zugeführt. Das Biosubstrat-Konzentrat wird hierbei vorzugsweise im Bereich von 0,05 bis 0,2 l/t geschredderten Mülls, bevorzugt im Bereich von 0,07 bis 0,15 l/t, dosiert. Um die Müllfeuchte optimal einzustellen, wird dem Biosubstrat-Konzentrat Wasser zugeführt, wobei das auf das Volumen bezogene Verdünnungsverhältnis von Biosubstrat-Konzentrat zu Wasser im Bereich von 1 : 20, bevorzugt im Bereich von 1 : 5, liegt.

Nun wird die Ausgangsfeuchte des Mülls derart eingestellt, daß der anfängliche Feuchtigkeitsgehalt des Mülls im Bereich von 50 % bis 70 %, bevorzugt in etwa bei 60 %, liegt. Hierzu ist es zum einen möglich, daß die Feuchte des geschredderten Mülls bestimmt wird und sodann die Wassermenge berechnet wird, die dem Müll zuzusetzen ist, um diesen anfänglichen Feuchtigkeitsgehalt zu erreichen. Weiter ist es jedoch auch möglich, daß einmal oder mehrfach der Feuchtigkeitsgehalt des angelieferten Mülls bestimmt wird und sodann im folgenden für weiter angelieferten Müll ein hieraus berechneter Mittelwert als Ausgangswert zur Berechnung der dem Müll zuzusetzenden Wassermenge herangezogen wird. Die dem Müll zuzusetzende Wassermenge wird vorteilhafterweise möglichst gleichmäßig in der Miete verteilt eingebracht. So kann die zuzusetzende Wassermenge bereits bei Schredderung des Mülls gemeinsam mit der Zugabe des Biosubstrats erfolgen. Die Einstellung der Anfangs-Feuchtigkeit des Mülls kann jedoch auch durch Besprühen der bereits aufgesetzten Miete mit Wasser eingestellt werden.

Die Bestimmung der Ausgangsfeuchtigkeit des Mülls erfolgt hierbei vorteilhafterweise nach dem Schreddem und Homogenisieren des Mülls und kann auch mittels eines mit einem entsprechenden Feuchtigkeitssensor ausgestatteten Steuerungselement automatisch bestimmt werden.

Der so vorbehandelte Müll 19 wird nun zu der Miete 1 aufgeschichtet. Die Mietenhöhe sollte hierbei nicht mehr als 3 m betragen. Die Mietenlänge muß mindestens 10 m betragen, wobei die Breite der Miete im Bereich von 4 m bis 20 m, bevorzugt im Bereich von 10 m, liegt. Die in den Figuren 1 bis 3 dargestellte Miete hat hierbei eine Mietenhöhe von 2,5 m, eine Mietenbreite von 10 m und kann eine Mietenlänge von 100 m erreichen.

Während oder vor dem Aufschichten der Miete 1 werden die flexiblen Stellwände 16, 17, 20 und 21 sowie die Luftverteilungselemente des Luftverteilsystems 14 platziert und miteinander verbunden. Nach dem Aufsetzen der Miete wird diese mit der Plane 15 vollständig abgedeckt und auf dem Randbereich der Stellwände 16, 17, 20 und 21 mit Ösen und Haken fixiert.

Es ist jedoch auch möglich, auf die Stellwände 16, 17, 20 und 21 zu verzichten und die Plane 15 bis zum befestigten Untergrund 18 zu führen und dort zu fixieren.

Nun wird mit der Dauerbelüftung der Miete 1 begonnen.

Der Verrottungsprozeß von organischen Abfällen läuft in verschiedenen Phasen ab, die durch das Angebot abbaubarer organischer Verbindungen bestimmt sind. Ausgehend von mesophilen Milieubedingungen (Temperaturbereich von ca. 25°C bis 45 °C) erfolgt aufgrund der mikrobakteriellen Aktivität ein Temperaturanstieg.

Infolge dieser Belüftung steigt die Mietentemperatur innerhalb der ersten 24 h sehr schnell auf 60 bis 65 °C. Die für einen optimal ablaufenden Rottevorgang maximale zulässige Temperatur beträgt etwa 70 °C, da oberhalb dieser Temperatur die Aktivität der Mehrzahl der die Umwandlung des Mülls bewirkenden Mikroorganismen stark abnimmt.

Ein weiterer entscheidender Faktor für einen optimalen Rottevorgang ist die gleichmäßige Luftverteilung innerhalb des Mietenkörpers, die sicherstellt, daß der Rotteprozeß innerhalb der Miete homogen abläuft. Des weiteren muß gewährleistet sein, daß eine aerobe Umwandlung erfolgen kann, um den Anfall von anaeroben geruchsintensiven Umwandlungsstoffen zu vermeiden. Andererseits ist eine zu starke Belüftung der Miete zu vermeiden, um einen zu starken Wärme- und Feuchtigkeitsaustrag aus der Miete zu vermeiden. Um somit einen optimalen Rotteprozeß zu gewährleisten, ist neben der bereits oben beschriebenen Vorbereitung des Mülls 19 und der bereits oben beschriebenen Wahl einer geeigneten Mietengröße und eines geeigneten anfänglichen Feuchtigkeitsgehaltes des Mülls eine geeignete Steuerung des Lufteintrages in die Miete von großer Bedeutung.

Der Lüfter 11 sollte bei Verwendung der Folie 15 hierbei so gesteuert werden, daß der Lufteintrag in die Miete mindestens zwischen dem 0,5- bis 8-fachen des Anfangmietenvolumens in m³/h, insbesondere zwischen dem 1- bis 2-fachen des Anfangmietenvolumens in m³/h, liegt. Innerhalb dieses Lufteintrags-Bereiches ist der Lüfter hier vorzugsweise so zu steuern, daß die Mietentemperatur zwischen 50 und 80 °C, insbesondere zwischen 60 und 70 °C, liegt.

Diese optimale Einstellung des Lüfters 11 kann hierbei von einem Bediener vorgenommen werden. Wie bereits oben beschrieben, ist es jedoch auch möglich, daß das Steuergerät 13 über eine Regelelektronik verfügt, die eine entsprechende Regelung des Lufteintrages durch Steuerung der Leistungszufuhr des Lüftermotors gewährleistet. Aus der Eingabe der Parameter der Miete, wie beispielsweise Mietengröße, Mietenvolumen, anfänglicher Feuchtigkeitsgehalt des Mülls, Art des Mülls und/oder durch den Anschluß der oben beschriebenen Sensoren an das Steuergerät 13 ist es dem Steuergerät 13 möglich, die Sollgröße für den optimalen Lufteintrag in die Miete adaptiv zu berechnen und die Leistung des Lüftermotors entsprechend einzustellen.

Die Miete 1 wird über eine Dauer von 2 bis 12 Wochen, bevorzugt 4 bis 8 Wochen, belüftet. Nach dem Ende der Belüftung wird die Plane 15 entfernt und der so umgewandelte Müll 19 in eine Deponie verfüllt. Weiter ist es möglich, daß der nun umgewandelte Müll 19 weiter aufgearbeitet wird, um qualitativ hochwertige Stoffe, wie beispielsweise Kompost oder Ersatzbrennstoffe zu erhalten. Dies ist insbesondere dann möglich, wenn als Müll 19 Biomüll oder Klärschlamm verwendet wird.

Die Müllaufbereitung mittels der erfindungsgemäßen Verfahren oder erfindungsgemäßer Verrottungsanlagen kann weiter prinzipiell in alle bestehenden Mültbehandtungsverfahren integriert werden. Damit lassen sich die oben beschriebenen Vorteile der Erfindung bei einer Vielzahl von Müllbehandlungsverfahren erreichen.

## Patentansprüche

1. Verfahren zur Verrottung von zu einer Miete (1) aufgeschüttetem Müll (19), insbesondere von zu einer Miete aufgeschüttetem Bio-Müll,
**dadurch gekennzeichnet,**
**daß** die Miete (1) mit einer Plane (15) abgedeckt wird, und daß die abgedeckte Miete (1) mittels eines Lüfters (11) und mittels eines mit dem Lüfter verbundenen Luftverteilsystems (14) belüftet wird, das ein oder mehrere Luftverteilungselemente (22, 23, 31 bis 54) aufweist, die sich in oder unter der Miete (1) erstrecken, wobei
(a) die Plane (15) eine wärmeisolierende, Schadstoffe und/oder Gerüche absorbierende Plane ist, die eine Schicht (62) aus offenporigem Schaumstoff mit einer Schichtdicke von 1,5 mm bis 8 mm aufweist, und bei der die Porenoberfläche des Schaumstoffes mit einem partikelförmigen Adsorptionsmittel und/oder mit einem Gemisch aus partikelförmigen Adsorptionsmittel zur Adsorption der Schadstoffe und/oder Gerüche besetzt sind, oder
(b) die Plane (15) eine Plane ist, die wasserabweisend und luftdurchlässig ist und ein partikelförmiges Adsorptionsmittel und/oder ein Gemisch aus partikelförmigen Adsorptionsmittel zur Adsorption von Schadstoffen und/oder Gerüchen enthält, die Anfangsfeuchtigkeit der Miete (1) aus 50 % bis 70 % eingestellt wird, bevorzugt auf etwa 60 % eingestellt wird, und der durch den Lüfter (11) und das Luftverteilsystem (14) bewirkte Lufteintrag in die Miete auf das 0,5- bis 8-fache des Anfangsmietenvolumens in **m³/h** eingestellt wird.

2. Verfahren zur Verrottung von zu einer Miete (1) aufgeschüttetem Müll (19) nach Anspruch 1,
**dadurch gekennzeichnet,**
**daß** die Schaumstoffporen der Schicht aus offenporigem Schaumstoff einen Durchmesser von 0,05 mm bis 2,0 mm besitzen und die einzusetzenden Adsorptionsmittel einen Partikeldurchmesser von 10 bis 100 µm besitzen.

3. Verfahren zur Verrottung von zu einer Miete (1) aufgeschüttetem Müll (19) nach Anspruch 1,
**dadurch gekennzeichnet,**
**daß** die einzusetzenden partikelförmigen Adsorptionsmittel Poren mit unterschiedlicher Weite aufweisen.

4. Verfahren zur Verrottung von zu einer Miete (1) aufgeschüttetem Müll (19) nach Anspruch 3,
**dadurch gekennzeichnet,**
**daß** die einzusetzenden partikelförmigen Adsorptionsmittel Mikroporen mit einer Weite von < 2 nm, Mesoporen mit einem Durchmesser von 2 bis 50 nm und Makroporen mit einem Durchmesser größer als 50 nm aufweisen.

5. Verfahren zur Verrottung von zu einer Miete(1) aufgeschüttetem Müll (19) nach einem der vorgehenden Ansprüche,
**dadurch gekennzeichnet,**
**daß** die Plane (15) von einem textilen Flächenverbund gebildet wird, wobei der textile Träger (61) des textilen Flächenverbundes (15) vorzugsweise von einem Polyestergelege mit einer Maschenweite von 1 bis 5 Fäden/cm gebildet wird.

6. Verfahren zur Verrottung von zu einer Miete (1) aufgeschüttetem Müll (19) nach Anspruch 5,
**dadurch gekennzeichnet,**
**daß** die Polyesterfäden (63) des textilen Flächenverbundes (15) eine mindestens 10 mal größere Breite als Dicke, vorzugsweise eine Breite von etwa 1 mm und eine Dicke von etwa 0,01 mm, besitzen.

7. Verfahren zur Verrottung von zu einer Miete (1) aufgeschüttetem Müll (19) nach Anspruch 1,
**dadurch gekennzeichnet,**
**daß** der Schaumstoff ein retikulierter Polyurethanschaum ist.

8. Verfahren zur Verrottung von zu einer Miete (1) aufgeschüttetem Müll (19) nach Anspruch 1,
**dadurch gekennzeichnet,**
**daß** die Plane (15) schwarz eingefärbt ist.

9. Verfahren zur Verrottung von zu einer Miete (1) aufgeschüttetem Müll (19) nach einem der vorgehenden Ansprüche,
**dadurch gekennzeichnet,**
**daß** der Lüfter (11) so gesteuert wird, daß der Lufteintrag in die Miete (1) zwischen dem 0,5- bis 8-fachen des Anfangsmietenvolumens in m³/h, insbesondere zwischen dem 1- bis 2-fachen des Anfangsmietenvolumens in m³/h, liegt.

10. Verfahren zur Verrottung von zu einer. Miete (1) aufgeschüttetem Müll (19) nach Anspruch 1
**dadurch gekennzeichnet,**
**daß** die Plane (15) einen textilen Flächenverbund aufweist.

11. Verfahren zur Verrottung von zu einer Miete (1) aufgeschüttetem Müll (19) nach einem der vorgehenden Ansprüche,
**dadurch gekennzeichnet,**
**daß** dem Müll (19) ein Biosubstrat zur Milieuverbesserung zugegeben wird.

12. Verfahren zur Verrottung von zu einer Miete (1) aufgeschüttetem Müll (19) nach Anspruch 11,
**dadurch gekennzeichnet,**
**daß** als Biosubstrat ein flüssiger Bakteriennährboden verwendet wird.

13. Verfahren zur Verrottung von zu einer Miete (1) aufgeschüttetem Müll (19) nach Anspruch 12,
**dadurch gekennzeichnet,**
**daß** das Biosubstrat als Wirkstoff Polyuronsäuren enthält.

14. Verfahren zur Verrottung von zu einer Miete (1) aufgeschüttetem Müll (19) nach Anspruch 11,
**dadurch gekennzeichnet,**
**daß** als Biosubstrat Bodenhilfsstoffe und/oder Pflanzenhilfsmittel eingesetzt werden, die ohne wesentlichen Nährstoffgehalt eine Milieuverbesserung bewirken.

15. Verfahren zur Verrottung von zu einer Miete (1) aufgeschüttetem Müll (19) nach Anspruch 11,
**dadurch gekennzeichnet,**
**daß** als Biosubstrat ein Biosubstrat-Konzentrat verwendet wird.

16. Verfahren zur Verrottung von zu einer Miete (1) aufgeschüttetem Müll (19) nach Anspruch 11,
**dadurch gekennzeichnet,**
**daß** die Dosiermenge des Biosubstrates im Bereich von 0,05 bis 0,2 l/t Müll, insbesondere im Bereich von 0,07 bis 0,15 l/t Müll, liegt.

17. Verfahren zur Verrottung von zu einer Miete (1) aufgeschüttetem Müll (19) nach Anspruch 15,
**dadurch gekennzeichnet,**
**daß** das Biosubstrat-Konzentrat mit Wasser in einem Verdünnungsverhältnis im Bereich von 1 : 20 bis 1 : 5 verdünnt wird.

18. Verfahren zur Verrottung von zu einer Miete (1) aufgeschüttetem Müll (19) nach einem der vorgehenden Ansprüche,
**dadurch gekennzeichnet,**
**daß** der durch den Lüfter und das Luftverteilsystem bewirkte Lufteintrag in die Miete auf das ein- bis zweifache des Anfangmietenvolumens in m³/h eingestellt wird.

19. Verfahren zur Verrottung von zu einer Miete (1) aufgeschüttetem Müll (19) nach einem der vorgehenden Ansprüche,
**dadurch gekennzeichnet,**
**daß** der Lüfter (11) so gesteuert wird, daß die Rottetemperatur zwischen 50 °C und 80°C, insbesondere zwischen 60 °C und 70°C, liegt.

20. Verfahren zur Verrottung von zu einer Miete (1) aufgeschüttetem Müll (19) nach einem der vorgehenden Ansprüche,
**dadurch gekennzeichnet,**
**daß** die Miete (1) seitlich mit ein oder mehreren flexiblen Stellwänden (16,17,20,21) begrenzt wird.

21. Verfahren zur Verrottung von zu einer Miete (1) aufgeschüttetem Müll (19) nach einem der vorgehenden Ansprüche,
**dadurch gekennzeichnet,**
**daß** das Luftverteilsystem (14) vor dem Aufschütten der Miete aus mehreren flexibel miteinander verbindbaren Luftverteilelementen (22, 23, 31 bis 54) zusammengesetzt wird.

22. Verfahren zur Verrottung von zu einer Miete (1) aufgeschüttetem Müll (19) nach Anspruch 21,
**dadurch gekennzeichnet,**
**daß** das Luftverteilsystem (14) aus ein oder mehreren Belüftungsrohren (22, 31 bis 44) zur Führung eines Hauptluftstromes und aus ein oder mehreren mit Belüftungsöffnungen versehenen Drainageschläuchen (51 bis 54) zur Führung eines Teilluftstromes zusammengesetzt wird.

23. Verfahren zur Verrottung von zu einer Miete (1) aufgeschüttetem Müll (19) nach Anspruch 21,
**dadurch gekennzeichnet,**
**daß** die Drainageschläuche (51 bis 54) in einem Abstand von 1 m bis 6 m verlegt werden.

24. Verfahren zur Verrottung von zu einer Miete (1) aufgeschüttetem Müll (19) nach einem der vorgehenden Ansprüche,
**dadurch gekennzeichnet,**
**daß** die Miete (1) derart aufgeschüttet wird, daß die Mietenhöhe maximal 3 m beträgt.

25. Verfahren zur Verrottung von zu einer Miete (1) aufgeschüttetem Müll (19) nach einem der vorgehenden Ansprüche,
**dadurch gekennzeichnet,**
**daß** die Miete (1) derart aufgeschüttet wird, daß die Grundfläche der Miete mindestens 0,6 m² pro Tonne Müll einnimmt.

26. Verfahren zur Verrottung von zu einer Miete (1) aufgeschüttetem Müll (19) nach einem der vorgehenden Ansprüche,
**dadurch gekennzeichnet,**
**daß** die Miete mindestens eine Länge von 10 m und eine Breite von 4 bis 20 m, insbesondere von 10 m, aufweist.

27. Verfahren zur Verrottung von zu einer Miete (1) aufgeschüttetem Müll (19) nach einem der vorgehenden Ansprüche,
**dadurch gekennzeichnet,**
**daß** das Verfahren zur Verrottung von Bio-Müll verwendet wird.

28. Verfahren zur Verrottung von zu einer Miete (1) aufgeschüttetem Müll (19) nach einem der vorgehenden Ansprüche,
**dadurch gekennzeichnet,**
**daß** das Verfahren zur Verrottung von Haus-, Gewerbe- oder Sperr-Müll mit einem Organik-Anteil von mindestens 20 Gewichtsprozenten verwendet wird.

29. Verfahren zur Verrottung von zu einer Miete (1) aufgeschüttetem Müll (19) nach einem der vorgehenden Ansprüche
**dadurch gekennzeichnet,**
**daß** das Verfahren zur Verrottung von Klärschlamm verwendet wird.

30. Anlage zur Verrottung von zu einer Miete (1) aufgeschüttetem Müll (19), insbesondere von zu einer Miete aufgeschüttetem Bio-Müll,
**dadurch gekennzeichnet,**
**daß** die Anlage einen Lüfter (11) und ein mit dem Lüfter (11) verbundenes Luftverteilsystem (14) zur Belüftung des Mülls (19) aufweist, wobei das Luftverteilsystem (14) ein oder mehrere Luftverteilungselemente (22, 23,31 bis 54) aufweist die sich in oder unter der Miete (1) erstrecken, und daß die Anlage eine Plane (15) zur Abdeckung der Miete aufweist, wobei die Plane
(a) eine wärmeisolierende, Schadstoffe und/oder Gerüche adsorbierende Plane ist und eine Schicht (62) aus offenporigem Schaumstoff mit einer Schichtdicke von 1,5 mm bis 8 mm aufweist und die Porenoberfläche des Schaumstoffes mit einem partikelförmigen Adsorptionsmittel und/oder mit einem Gemisch aus partikelförmigen Adsorptionsmitteln zur Adsorption der Schadstoffe und/oder Gerüche besetzt sind, oder
(b) die Plane wasserabweisend und luftdurchlässig ist und ein partikelförmiges Adorptionsmittel und/oder ein Gemisch aus partikelförmigen Adsorptionsmitteln zur Adsorption von Schadstoffen und/oder Gerüchen enthält, und der Lüfter derart dimensioniert und gesteuert ist, daß der Lufteinetrag in die Miete zwischen dem 0,6- bis 8-fachen des Anfangsmietenvolumens in m³/h liegt, daß die Anfangs-Feuchtigkeit der Miete (1) 50 bis 70% beträgt, bevorzugt 60% beträgt.

## Claims

1. Method for rotting waste (19) which is deposited in the form of a mound (1), in particular biological waste deposited in the form of a mound, **characterised in that** the mound (1) is covered with a tarpaulin (15) and **in that** the covered mound (1) is ventilated by means of a ventilator (11) and by means of an air distribution system (14) which is connected to the ventilator and has one or more air distribution elements (22, 23, 31 to 54) extending in or below the mound (1), wherein (a) the tarpaulin (15) is a heat-insulating tarpaulin which absorbs harmful substances and/or odours and has a layer (62) of open-pored foam having a thickness of from 1.5 mm to 8 mm and in which the pore surface of the foam is fed with a particulate adsorption agent and/or with a mixture of particulate adsorption agents for adsorbing the harmful substances and/or odours, or (b) the tarpaulin (15) is a tarpaulin which is water-repellent and air-permeable and contains a particulate adsorption agent and/or a mixture of particulate adsorption agents for adsorbing harmful substances and/or odours, the initial moisture content of the mound (1) is set to 50% to 70%, preferably to approximately 60%, and the quantity of air introduced into the mound by the ventilator (11) and the air distribution system (14) is set to 0.5 to 8 times the initial volume of the mound in m³/h.

2. Method for rotting waste (19) deposited in the form of a mound (1) according to claim 1, **characterised in that** the foam pores of the layer of open-pored foam have a diameter of from 0.05 mm to 2.0 mm and the adsorption agents to be used have a particle diameter of from 10 to 100 µm.

3. Method for rotting waste (19) deposited in the form of a mound (1) according to claim 1, **characterised in that** the particulate adsorption agents to be used have pores of differing width.

4. Method for rotting waste (19) deposited in the form of a mound (1) according to claim 3, **characterised in that** the particulate adsorption agents to be used have micropores having a width of < 2 nm, mesopores having a diameter of from 2 to 15 nm and macropores having a diameter of greater than 50 nm.

5. Method for rotting waste (19) deposited in the form of a mound (1) according to any one of the preceding claims, **characterised in that** the tarpaulin (15) is formed by a two-dimensional textile composite, the textile carrier (61) of the two-dimensional textile composite (15) preferably being formed by a polyester nonwoven fabric having a mesh of 1 to 5 yarns/cm.

6. Method for rotting waste (19) deposited in the form of a mound (1) according to claim 5, **characterised in that** the polyester yarns (63) of the two-dimensional textile composite (15) have a width which is at least 10 times greater than their thickness and preferably have a width of approximately 1 mm and a thickness of approximately 0.01 mm.

7. Method for rotting waste (19) deposited in the form of a mound (1) according to claim 1, **characterised in that** the foam is a crosslinked polyurethane foam.

8. Method for rotting waste (19) deposited in the form of a mound (1) according to claim 1, **characterised in that** the tarpaulin (15) is dyed black.

9. Method for rotting waste (19) deposited in the form of a mound (1) according to any one of the preceding claims, **characterised in that** the ventilator (11) is controlled in such a way that the quantity of air introduced into the mound (1) is between 0.5 and 8 times the initial volume of the mound in m³/h, in particular between 1 and 2 times the initial volume of the mound in m³/h.

10. Method for rotting waste (19) deposited in the form of a mound (1) according to claim 1, **characterised in that** the tarpaulin (15) has a two-dimensional textile composite.

11. Method for rotting waste (19) deposited in the form of a mound (1) according to any one of the preceding claims, **characterised in that** a biosubstrate is added to the waste (19) to improve the environment.

12. Method for rotting waste (19) deposited in the form of a mound (1) according to claim 11, **characterised in that** the biosubstrate used is a liquid bacterial culture medium.

13. Method for rotting waste (19) deposited in the form of a mound (1) according to claim 12, **characterised in that** the biosubstrate contains polyuronic acids as the active ingredient.

14. Method for rotting waste (19) deposited in the form of a mound (1) according to claim 11, **characterised in that** the biosubstrate used is in the form of soil auxiliaries and/or plant auxiliaries which improve the environment without a substantial nutrient content.

15. Method for rotting waste (19) deposited in the form of a mound (1) according to claim 11, **characterised in that** the biosubstrate used is a biosubstrate concentrate.

16. Method for rotting waste (19) deposited in the form of a mound (1) according to claim 11, **characterised in that** the amount of biosubstrate added is in the range from 0.05 to 0.2 l/t of waste, in particular in the range from 0.07 to 0.15 l/t of waste.

17. Method for rotting waste (19) deposited in the form of a mound (1) according to claim 15, **characterised in that** the biosubstrate concentrate is diluted with water in a dilution ratio in the range of from 1:20 to 1:5.

18. Method for rotting waste (19) deposited in the form of a mound (1) according to any one of the preceding claims, **characterised in that** the quantity of air introduced into the mound by the ventilator and the air distribution system is adjusted to one to two times the initial volume of the mound in m³/h.

19. Method for rotting waste (19) deposited in the form of a mound (1) according to any one of the preceding claims, **characterised in that** the ventilator (11) is controlled in such a way that the rotting temperature is between 50°C and 80°C, in particular between 60°C and 70°C.

20. Method for rotting waste (19) deposited in the form of a mound (1) according to any one of the preceding claims, **characterised in that** the mound (1) is delimited laterally by one or more flexible adjustable walls (16, 17, 20, 21).

21. Method for rotting waste (19) deposited in the form of a mound (1) according to any one of the preceding claims, **characterised in that** the air distribution system (14) is assembled, before the mound is deposited, from a plurality of air distribution elements (22, 23, 31 to 54) which can be flexibly connected to one another.

22. Method for rotting waste (19) deposited in the form of a mound (1) according to claim 21, **characterised in that** the air distribution system (14) is composed of one or more ventilation pipes (22, 31 to 44) for guiding a main air flow and of one or more drainage tubes (51 to 54) provided with ventilation openings for guiding a partial air flow.

23. Method for rotting waste (19) deposited in the form of a mound (1) according to claim 21, **characterised in that** the drainage tubes (51 to 54) are laid at a distance of from 1 m to 6 m from one another.

24. Method for rotting waste (19) deposited in the form of a mound (1) according to any one of the preceding claims, **characterised in that** the mound (1) is deposited in such a way that the height of the mound is at most 3 m.

25. Method for rotting waste (19) deposited in the form of a mound (1) according to any one of the preceding claims, **characterised in that** the mound (1) is deposited in such a way that the area of the mound assumes a value of at least 0.6 m² per tonne of waste.

26. Method for rotting waste (19) deposited in the form of a mound (1) according to any one of the preceding claims, **characterised in that** the mound has at least a length of 10 m and a width of from 4 to 20 m, in particular of 10 m.

27. Method for rotting waste (19) deposited in the form of a mound (1) according to any one of the preceding claims, **characterised in that** the method is used for rotting biological waste.

28. Method for rotting waste (19) deposited in the form of a mound (1) according to any one of the preceding claims, **characterised in that** the method is used for rotting domestic, industrial or bulky waste having an organic content of at least 20 per cent by weight.

29. Method for rotting waste (19) deposited in the form of a mound (1) according to any one of the preceding claims, **characterised in that** the method is used for rotting sewage sludge.

30. System for rotting waste (19) which is deposited in the form of a mound (1), in particular biological waste deposited in the form of a mound, **characterised in that** the system has a ventilator (11) and an air distribution system (14) connected to the ventilator (11) for ventilating the waste (19), the air distribution system (14) having one or more air distribution elements (22, 23, 31 to 54) extending in or below the mound (1), and **in that** the system has a tarpaulin (15) for covering the mound, wherein (a) the tarpaulin (15) is a heat-insulating tarpaulin which absorbs harmful substances and/or odours and has a layer (62) of open-pored foam having a thickness of from 1.5 mm to 8 mm and the pore surface of the foam is fed with a particulate adsorption agent and/or with a mixture of particulate adsorption agents for adsorbing the harmful substances and/or odours, or (b) the tarpaulin is water-repellent and air-permeable and contains a particulate adsorption agent and/or a mixture of particulate adsorption agents for adsorbing harmful substances and/or odours, and the ventilator is configured and controlled in such a way that the quantity of air introduced into the mound is between 0.6 and 8 times the initial volume of the mound in m³/h and that the initial moisture content of the mound (1) is 50 to 70% and is preferably 60%.

## Revendications

1. Procédé de putréfaction de déchets (19) remblayés pour former un tas (1), en particulier de déchets biologiques remblayés pour former un tas (1),
**caractérisé en ce**
**que** le tas (1) est recouvert d'une bâche (15) et que le tas recouvert (1) est aéré au moyen d'un ventilateur (11) et au moyen d'un système de répartition de l'air (14) relié au ventilateur, qui présente un ou plusieurs éléments de répartition de l'air (22, 23, 31 à 54) qui s'étendent dans ou sous le tas (1),
(a) la bâche (15) étant une bâche thermo-isolante, absorbant les substances nocives et/ou les odeurs qui présente une couche (62) de mousse à pores ouverts avec une épaisseur de couche de 1,5 mm à 8 mm et dans laquelle la surface des pores de la mousse est occupée par un agent d'adsorption formant des particules et/ou par un mélange d'agents d'adsorption formant des particules permettant d'adsorber les substances nocives et/ou les odeurs, ou
(b) la bâche (15) étant une bâche hydrofuge et laissant passer l'air et comportant un agent d'adsorption formant des particules et/ou avec un mélange d'agents d'adsorption formant des particules pour adsorber les substances nocives et/ou les odeurs, l'humidité initiale du tas (1) est réglée à 50 % à 70 %, de préférence à environ 60 %, et l'apport d'air effectué par le ventilateur (11) et le système de répartition de l'air (14) dans le tas est de 0,5 à 8 fois le volume de tas initial en m³/h.

2. Procédé de putréfaction de déchets (19) remblayés pour former un tas (1) selon la revendication 1,
**caractérisé en ce**
**que** les pores de la mousse de la couche de mousse à ports ouverts ont un diamètre de 0,05 mm à 2,0 mm et les agents d'adsorption à employer ont un diamètre de particule de 10 à 100 µm.

3. Procédé de putréfaction de déchets (19) remblayés pour former un tas (1) selon la revendication 1,
**caractérisé en ce**
**que** les agents d'adsorption formant des particules à employer présentent des pores avec une largeur différente.

4. Procédé de putréfaction de déchets (19) remblayés pour former un tas (1) selon la revendication 3,
**caractérisé en ce**
**que** les agents d'adsorption formant des particules à employer présentent des micropores d'une largeur de < 2 nm, des mésopores d'un diamètre de 2 à 50 nm et des macropores d'un diamètre supérieur à 50 nm.

5. Procédé de putréfaction de déchets (19) remblayés pour former un tas (1) selon l'une quelconque des revendications précédentes,
**caractérisé en ce**
**que** la bâche (15) est formée par un assemblage surfacique textile, le support textile (61) de l'assemblage surfacique textile (15) étant formé de préférence par un non-tissé en polyester avec une largeur de maille de 1 à 5 fils/cm.

6. Procédé de putréfaction de déchets (19) remblayés pour former un tas (1) selon la revendication 5,
**caractérisé en ce**
**que** les fils de polyester (63) de l'assemblage surfacique textile (15) ont une largeur au moins 10 fois supérieure à l'épaisseur, de préférence une largeur d'environ 1 mm et une épaisseur d'environ 0,01 mm.

7. Procédé de putréfaction de déchets (19) remblayés pour former un tas (1) selon la revendication 1,
**caractérisé en ce**
**que** la mousse est une mousse de polyuréthane réticulée.

8. Procédé de putréfaction de déchets (19) remblayés pour former un tas (1) selon la revendication 1,
**caractérisé en ce**
**que** la bâche (15) est de couleur noire.

9. Procédé de putréfaction de déchets (19) remblayés pour former un tas (1) selon l'une quelconque des revendications précédentes,
**caractérisé en ce**
**que** le ventilateur (11) est commandé de telle sorte que l'apport d'air dans le tas (1) est entre 0,5 à 8 fois le volume de tas initial en m³/h, particulièrement entre 1 à 2 fois le volume de tas initial en m³/h.

10. Procédé de putréfaction de déchets (19) remblayés pour former un tas (1) selon la revendication 1,
**caractérisé en ce**
**que** la bâche (15) présente un assemblage surfacique textile.

11. Procédé de putréfaction de déchets (19) remblayés pour former un tas (1) selon l'une quelconque des revendications précédentes,
**caractérisé en ce**
**qu'**un substrat biologique est ajouté aux déchets (19) permettant une amélioration du milieu.

12. Procédé de putréfaction de déchets (19) remblayés pour former un tas (1) selon la revendication 12,
**caractérisé en ce**
**qu'**un engrais bactérien liquide est utilisé comme substrat biologique.

13. Procédé de putréfaction de déchets (19) remblayés pour former un tas (1) selon la revendication 12,
**caractérisé en ce**
**que** le substrat biologique contient des acides polyuroniques comme substance active.

14. Procédé de putréfaction de déchets (19) remblayés pour former un tas (1) selon la revendication 11,
**caractérisé en ce**
**que** des bio-engrais et/ou des phytostimulants qui entraînent une amélioration du milieu sans teneur en substances nutritives essentielles sont employés comme substrat biologique.

15. Procédé de putréfaction de déchets (19) remblayés pour former un tas (1) selon la revendication 11,
**caractérisé en ce**
**que** un concentré de substrat biologique est utilisé comme substrat biologique.

16. Procédé de putréfaction de déchets (19) remblayés pour former un tas (1) selon la revendication 11,
**caractérisé en ce**
**que** la quantité de dosage du substrat biologique est située dans une proportion comprise entre 0,05 et 0,2 1/t de déchets, particulièrement dans proportion comprise entre 0,07 et 0,15 1/t de déchets.

17. Procédé de putréfaction de déchets (19) remblayés pour former un tas (1) selon la revendication 15,
**caractérisé en ce**
**que** le concentré de substrat biologique est dilué avec de l'eau dans un rapport de dilution situé dans proportion comprise entre 1:20 et 1:5.

18. Procédé de putréfaction de déchets (19) remblayés pour former un tas (1) selon l'une quelconque des revendications précédentes,
**caractérisé en ce**
**que** l'apport d'air effectué par le ventilateur et le système de répartition de l'air dans le tas est réglé à une à deux fois le volume de tas initial en m³/h.

19. Procédé de putréfaction de déchets (19) remblayés pour former un tas (1) selon l'une quelconque des revendications précédentes,
**caractérisé en ce**
**que** le ventilateur (11) est commandé de telle sorte que la température de putréfaction est située entre 50° C et 80° C, particulièrement entre 60° C et 70° C.

20. Procédé de putréfaction de déchets (19) remblayés pour former un tas (1) selon l'une quelconque des revendications précédentes,
**caractérisé en ce**
**que** le tas (1) est délimité latéralement par une ou plusieurs parois de réglage flexibles (16, 17, 20, 21).

21. Procédé de putréfaction de déchets (19) remblayés pour former un tas (1) selon l'une quelconque des revendications précédentes,
**caractérisé en ce**
**que** le système de répartition de l' air (14) avant le remblayage du tas, est constitué de plusieurs éléments de répartition de l'air (22, 23, 31 à 54) flexibles pouvant être reliés entre eux.

22. Procédé de putréfaction de déchets (19) remblayés pour former un tas (1) selon la revendication 21,
**caractérisé en ce**
**que** le système de répartition de l'air (14) est composé d'un ou plusieurs tubes (22, 31 à 44) destinés à guider un flux d'air principal et d'un ou plusieurs flexibles de drainage (51 à 54) munis d'ouvertures d'aération destinées à guider un flux d'air partiel.

23. Procédé de putréfaction de déchets (19) remblayés pour former un tas (1) selon la revendication 21,
**caractérisé en ce**
**que** les flexibles de drainage (51 à 54) sont posés à une distance de 1 m à 6 m.

24. Procédé de putréfaction de déchets (19) remblayés pour former un tas (1) selon l'une quelconque des revendications précédentes,
**caractérisé en ce**
**que** le tas (1) est remblayé de sorte que la hauteur de bâche maximale atteint 3 m.

25. Procédé de putréfaction de déchets (19) remblayés pour former un tas (1) selon l'une quelconque des revendications précédentes,
**caractérisé en ce**
**que** le tas (1) est remblayé de sorte que la base du tas absorbe au moins 0,6 m² par tonne de déchets.

26. Procédé de putréfaction de déchets (19) remblayés pour former un tas (1) selon l'une quelconque des revendications précédentes,
**caractérisé en ce**
**que** le tas présente au moins une longueur de 10 m et une largeur de 4 à 20 m, particulièrement de 10 m.

27. Procédé de putréfaction de déchets (19) remblayés pour former un tas (1) selon l'une quelconque des revendications précédentes,
**caractérisé en ce**
**que** le procédé est utilisé pour la putréfaction de déchets biologiques.

28. Procédé de putréfaction de déchets (19) remblayés pour former un tas (1) selon l'une quelconque des revendications précédentes,
**caractérisé en ce**
**que** le procédé est utilisé pour la putréfaction de déchets domestiques, industriels ou encombrants avec une teneur organique d'au moins 20 pourcents en poids.

29. Procédé de putréfaction de déchets (19) remblayés pour former un tas (1) selon l'une quelconque des revendications précédentes,
**caractérisé en ce**
**que** le procédé est utilisé pour la putréfaction de boues d'épuration.

30. Installation de putréfaction de déchets (19) remblayés pour former un tas (1) particulièrement de déchets biologiques,
**caractérisée en ce**
**que** l'installation présente un ventilateur (11) et un système de répartition de l'air (14) relié au ventilateur (11) pour aérer les déchets (19), le système de répartition de l'air (14) présentant un ou plusieurs éléments de répartition de l'air (22, 23, 31 à 54) qui s'étendent dans ou sous le tas (1) et que l'installation présente une bâche (15) pour recouvrir le tas,
(a) la bâche étant une bâche thermo-isolante, absorbant les substances nocives et/ou les odeurs qui présente une couche (62) de mousse à pores ouverts avec une épaisseur de couche de 1,5 mm à 8 mm et dans laquelle la surface des pores de la mousse est occupée par un agent d'adsorption formant des particules et/ou avec un mélange d'agents d'adsorption formant des particules pour adsorber les substances nocives et/ou les odeurs, ou
(b) la bâche étant une bâche hydrofuge et laissant passer l'air et comportant un agent d'adsorption formant des particules et/ou avec un mélange d'agents d'adsorption formant des particules pour adsorber les substances nocives et/ou les odeurs, le ventilateur est dimensionné et commandé de telle sorte que l'apport d'air dans la bâche est de 0,6 à 8 fois le volume de tas initial en m³/h, que l'humidité initiale du tas (1) est réglée à 50 % jusqu'à 70 %, de préférence à environ 60 %.
